# EUROPÄISCHE PATENTANMELDUNG

(11) **EP 0 870 700 A2**
(43) Veröffentlichungstag der Anmeldung: **14.10.1998**
(21) Anmeldenummer: 98103697.3
(22) Anmeldetag: 03.03.1998
(51) Int. Cl.: B65G 23/12

(54) **Antriebseinrichtung eines Gurtförderers**

(30) Priorität: 11.04.1997 DE 19715058
(71) Anmelder: TRANSNORM SYSTEM GmbH, 31177 Harsum (DE)
(72) Erfinder: Warnecke, Karl, 31079 Sibbesse (DE)
(74) Vertreter: Arendt, Helmut, Dipl.-Ing.

(57) **Zusammenfassung**

Halteeinrichtung für eine Andruckrolle einer Antriebstrommel eines Gurtförderes, wobei die Rolle (6a,6b) an einer Halteleiste (8a,8b) befestigt ist, welche über ein in Leistenmitte vorgesehenes Gelenk (15) an einem gegen die Antriebstrommel (5) schwenkbaren Andruckhebel (9a,10a;9b,10b) befestigt ist.

## Beschreibung

Die Erfindung betrifft eine Halteeinrichtung für die Andruckrolle (back-up-Rolle) einer Antriebstrommel eines Gurtförderers.

Zur Verbesserung der Traktion der Paarung Fördergurt/Antriebstrommel ist es üblich, Andruckrollen an der Ablaufseite der Antriebstrommel anzuordnen. Die Fachsprache verwendet hierfür den Ausdruck 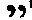 back-up-Rolle". Vor allem bei einem Reversierantrieb werden Andruckrollen zu beiden Seiten der zentral angeordneten Antriebstrommel vorgesehen. Es ist schwierig, die Andruckrolle über die gesamte Gurtbreite oder Rollenlänge gleichmäßig an die Antriebstrommel zu drücken. Dieses Problem stellt sich insbesondere bei Kurvengurtförderern ein, deren Zentralantrieb eine konisch ausgebildete Antriebstrommel aufweist. Deshalb ist eine Andruckrolle mit einer Justier- und Fixiereinheit versehen, um sie unabhängig am Innen- und Außenradius einstellen zu können. Ein völlig gleichmäßiger Anpreßdruck über die gesamte Breite ist dennoch kaum erreichbar. Zu berücksichtigen ist vor allern, daß sich die Rollenachse immer etwas durchbiegen kann, was zu unterschiedlichen Anpreßdrücken führt. Die Montage und Justierung der Andruckrollen ist nur von Fachleuten ausführbar.

Die bisherigen Justier- und Fixiereinrichtungen für Anpreßrollen erschweren auch einen Austausch der dem Verschleiß ausgesetzten Fördergurte. Die Auswechslung ist ohne eine Demontage der Andruckrollen mit den zugehörigen Halte- und Justiereinrichtungen nicht möglich.

Aufgabe der Erfindung ist es, die Nachteile der bisherigen Einrichtungen zu beheben und eine gattungsgemäße Halteeinrichtung zu schaffen, die das genaue Justieren, insbesondere das notwendige Nachjustieren nach längerer Laufzeit durch eine Automatisierung dieses Vorgangs, erübrigt. Die Erfindung löst diese Aufgabe durch eine Halteeinrichtung für die Andruckrolle nach den kennzeichnenden Merkmalen des Patentanspruchs 1.

Die Anpreßkraft der Andruckrolle ist über deren Länge gleichmäßig hoch, da sich durch den mittigen Drehpunkt der Halteleiste automatisch ein Kräftegleichgewicht einstellt. Zur Montage oder Demontage eines Gurtes kann die Halteleiste mit der Andruckrolle um den Drehpunkt des Andruckhebels zur Seite geschwenkt werden. Die sich ergebende erhebliche Verringerung der Gurtspannung ermöglicht es, den Gurt ohne weiteren Aufwand abzunehmen. Die Montage eines neuen Gurtes erfolgt in entsprechend umgekehrter Reihenfolge.

Zur weiteren vorteilhaften Gestaltung des Erfindungsgegenstandes wird vorgeschlagen, den Andruckarm oder Hebel zweiarmig auszubilden, an dessen Kraftarm zur Erzeugung der sich automatisch ausgleichenden Andruckkraft eine Zugspindel ansetzt. Zur Änderung der Andruckkraft ist es lediglich notwendig, die Zugspindel zu verstellen.

In weiterer vorteilhafter konstruktiver Gestaltung kann der Kraftarm mit Abstand unter dem Lastarm des Andruckhebels angeordnet sein, wobei eine Schwenkwelle die beiden Hebelarme verbindet und die Zugspindel mit ihrem dem Kraftarm abgekehrten Ende mit dem Konsolenprofil des Gurtförderers fest verbunden ist.

Weitere den Erfindungsgegenstand vorteilhaft gestaltende Merkmale sind den Patentansprüchen zu entnehmen.

In der Zeichnung ist ein Ausführungsbeispiel der Erfindung anhand eines Kurvengurtförderers schematisch dargestellt und nachstehend erläutert. Es zeigen:

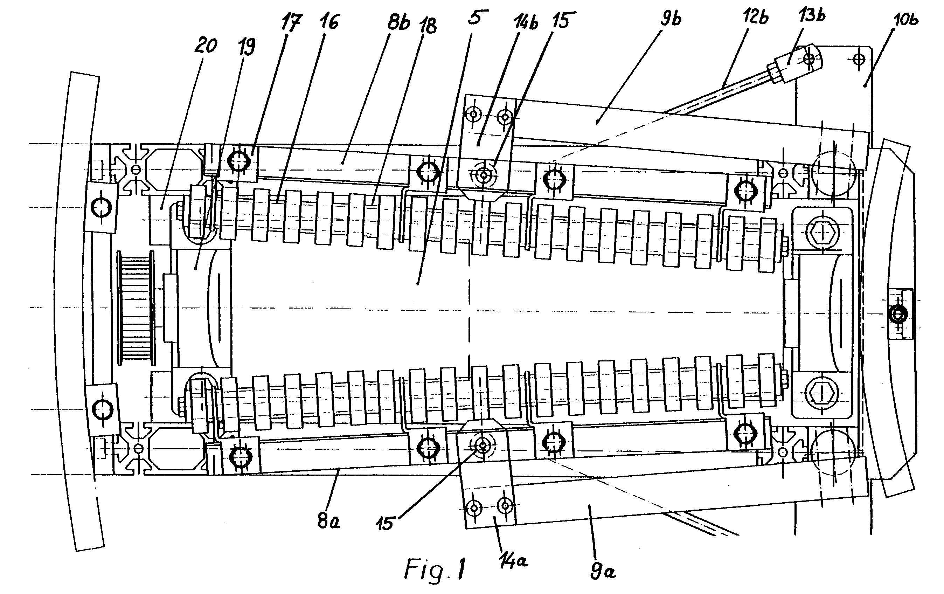

- Figur 1: die Draufsicht der Einrichtung,
- Figur 2: eine Seitenansicht,

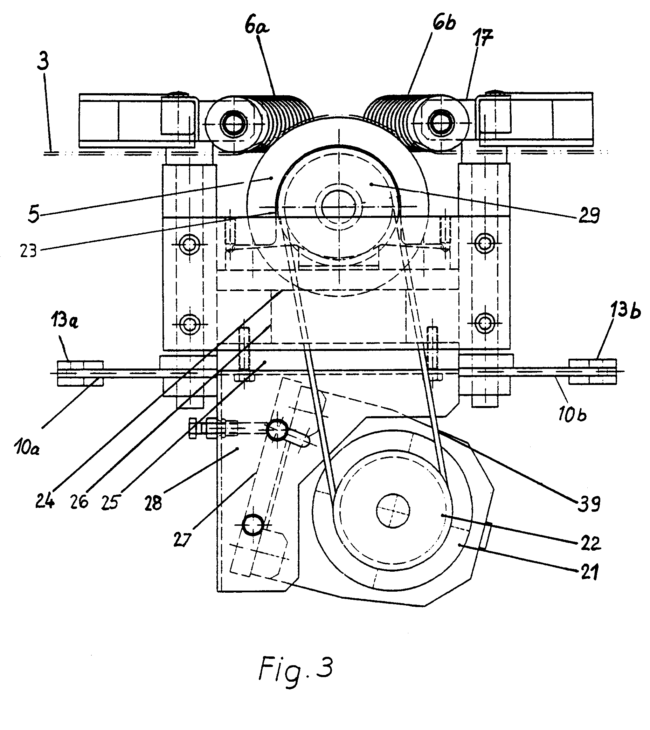

- Figur 3: eine Frontansicht,

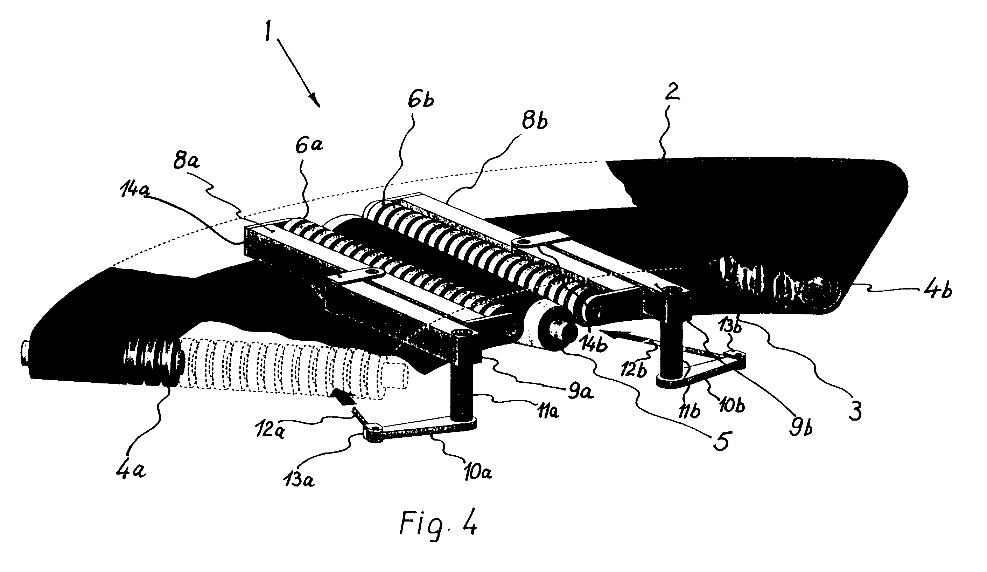

- Figur 4: eine schaubildliche Darstellung der wichtigsten Teile der Einrichtung und
- Figur 5: die Anordnung einer Druckfeder auf den Zugspindeln zur Erzeugung einer federnden Anpreßkraft für die Andruckrollen.

Die in den Figuren der Zeichnung verwendeten Bezugszahlen sind in der folgenden Bezugszeichenliste aufgeführt:
- 1: Kurvengurtförderer mit zentraler Antriebseinrichtung
- 2: Obertrum des Gurtes
- 3: Untertrum des Gurtes
- 4a, b: Umlenkrollen
- 5: Antriebstrommel
- 6a, b: Andruckrollen (back-up)
- 8a, b: Halteleisten
- 9a, b: Lastarme der Andruckhebel
- 10a, b: Kraftarme der Andruckhebel (Spannarme)
- 11a, b: Schwenkwellen der Andruckhebel
- 12a, b: Zugspindeln
- 13a, b: Gabelköpfe
- 14a, b: Verbindungslaschen
- 15: Drehachsen
- 16: Andruckrollenachsen
- 17: Achshalter
- 18: Distanzringe
- 19: Stehlager
- 20: Motortraverse
- 21: Getriebemotor
- 22: Keilriemen- oder Zahnscheibe
- 23: Stehlager
- 24: Lagerplatte
- 25: Grundplatte
- 26: Motortraverse
- 27: Motorplatte
- 28: Halteblech
- 29: Keilriemen- oder Zahnscheibe
- 30: Konsolenprofil
- 31: Spannwinkel
- 32: Haltekonsole, innen
- 33: Stationshalter, innen
- 34: Schwenklager
- 35: Stellprofil, außen
- 36: Halteplatten, außen
- 37: Stellmutter
- 38: Kontermutter
- 39: Antriebskette oder Zahnriemen
- 40: Schraubendruckfeder
- 41: Stellmutter
- 42: Kontermutter
- 43: Anschlagschraubenmutter
- 44: Kontermutter

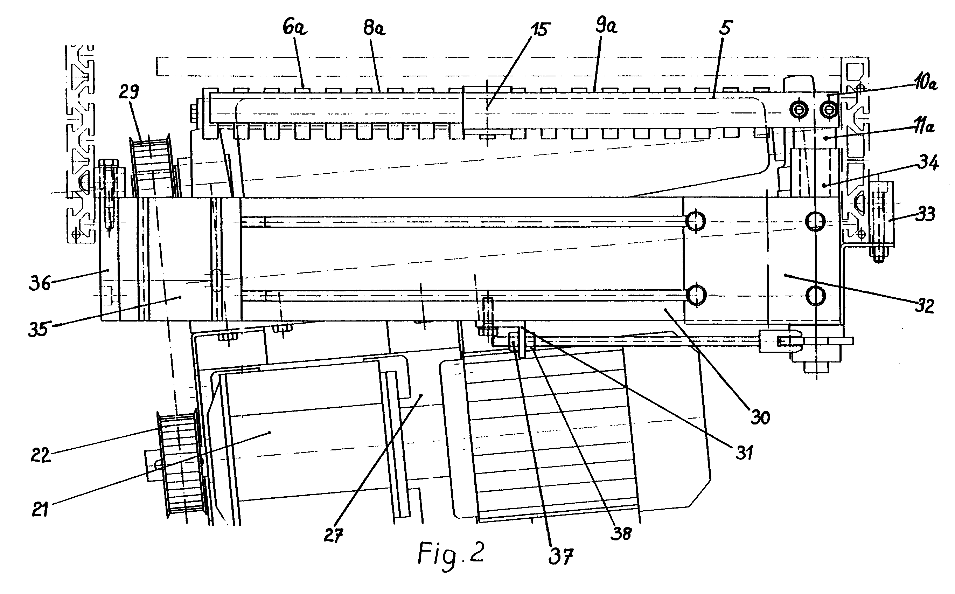

Zu beiden Seiten der Antriebstrommel 5 sind Andruckrollen 6a, 6b vorgesehen, die über Halteleisten 8a, 8b schwenkbar an Andruckhebeln 9a, 9b, 10a, 10b befestigt sind. Die Halteleisten 8a, 8b sind genau mittig mit Drehachsen 15 versehen, um die sie in Art einer gleicharmigen Balkenwaage drehbar sind. Die Kraftarme 10a, 10b der Andruckhebel sind mit Abstand unterhalb der Lastarme 9a, 9b angeordnet. Schwenkwellen 11a, 11b stellen die Verbindung her. An den Kraftarmen setzen Zugspindeln 12a, 12b an. Die Zugkraft ist durch Stellmuttern 37 (Figur 2) veränderbar.

Zur Montage oder Demontage werden die Zugspindeln gelöst und die Andruckhebel 9, 10 mit den Halteleisten 8 von der Antriebstrommel 5 weggeschwenkt. Die sich dadurch ergebende Lose in den Trums 2, 3 des Fördergurtes ermöglicht die Gurtabnahme und Auswechslung gegen einen neuen.

In umgekehrter Reihenfolge werden die Halteleisten 8 mit den Andruckrollen 6 wieder gegen die Antriebstrommel 5 geschwenkt. Durch Befestigung und Anziehen der Stellmutter 37 und Fixierung durch die Kontermutter 38 kann der notwendige konstante Anpreßdruck erzeugt werden.

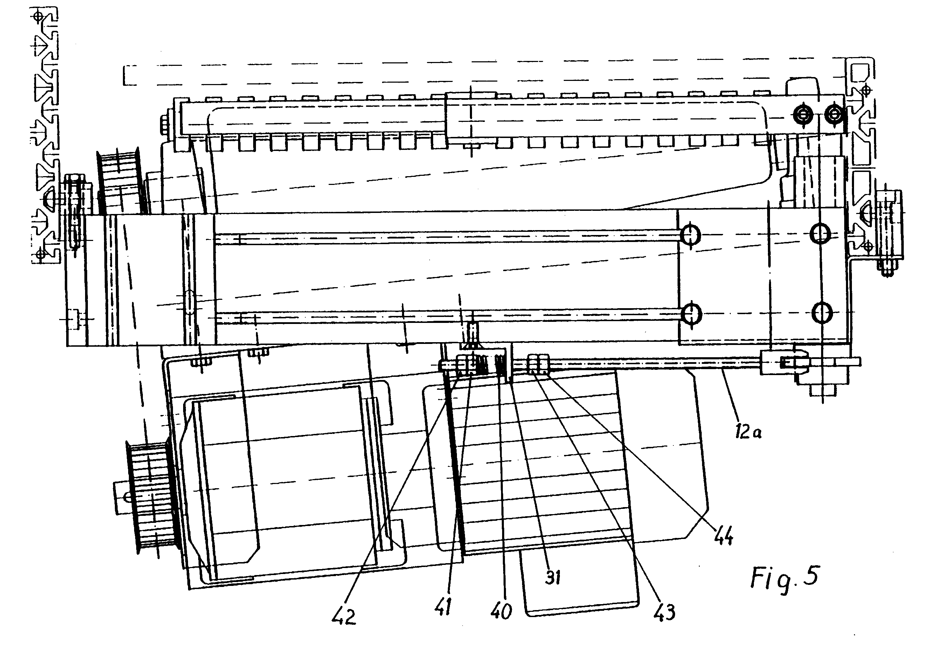

Die Anpreßkraft der Andruckrollen kann auch durch Verwendung einer Druckfeder federnd nachgiebig gestaltet werden. Hierfür wird, wie die Figur 5 zeigt, zwischen einer Stellmutter 41 und dem Spannwinkel 31 eine Schraubendruckfeder 40 auf der Zugspindel angeordnet. Mit Hilfe der Stellmutter 41 kann die Anpreßkraft justiert werden. Durch eine Kontermutter 42 wird die Position der Stellmutter fixiert. Auf der der Druckfeder abgekehrten Seite des Spannwinkels 31 kann mit Abstand zu diesem eine weitere Schraubenmutter 43 als Anschlagmutter angeordnet und durch eine Kontermutter 44 fixiert werden. Die Schraubenmutter 43 dient damit als Begrenzungs- oder Endanschlag für fehlende Ausgleichsbewegungen. Die Verwendung einer Druckfeder ist insbesondere für den Reversierbetrieb von Vorteil, da die Gurtspannungen in Bewegungsrichtung vor und hinter der Antriebstrommel sehr unterschiedlich sind. Die sich ändernden Positionen der Andruckrollen nach einem Reversiervorgang, d. h. nach einem Wechsel der Antriebsrichtung, können durch die Feder 40 ausgeglichen werden.

## Patentansprüche

1. Halteeinrichtung für die Andruckrolle (back-up-Rolle) einer Antriebstrommel eines Gurtförderers, dadurch gekennzeichnet, daß die Rolle (6a, 6b) an einer Halteleiste (8a, 8b) befestigt ist, welche über ein in Leistenmitte vorgesehenes Gelenk (15) an einem gegen die Antriebstrommel (5) schwenkbaren Andruckhebel (9a, 10a; 9b, 10b) befestigt ist.

2. Halteeinrichtung nach Anspruch 1, dadurch gekennzeichnet, daß der Andruckhebel zweiarmig ausgebildet ist, an dessen Kraftarm (10a, 10b) zur Einstellung der Andruckkraft eine Zugspindel (12a, 12b) ansetzt.

3. Halteeinrichtung nach Anspruch 1 oder 2, dadurch gekennzeichnet, daß der Kraftarm (10a, 10b) unter dem Lastarm (9a, 9b) des Andruckhebels angeordnet und über eine Schwenkwelle (11a, 11b) mit diesem verbunden und die Zugspindel mit ihrem dem Kraftarm abgekehrten Ende mit dem Konsolenprofil (30) des Gurtförderers fest verbunden ist.

4. Halteeinrichtung nach einem der Ansprüche 1 bis 3, dadurch gekennzeichnet, daß die Zugspindel mit einem Gabelkopf (13a, 13b) am Kraftarm des Andruckhebels und mit ihrem gegenüberliegenden Ende an einem am Konsolenprofil angeordneten Spannwinkel (31) verstellbar befestigt ist.

5. Halteeinrichtung nach einem der Ansprüche 1 bis 4, dadurch gekennzeichnet, daß das äußere Lastarmende des Andruckhebels eine Lasche (14a, 14b) mit dem Gelenk (15) für die drehbare Befestigung der Halteleiste trägt.

6. Halteeinrichtung nach einem der Ansprüche 1 bis 5, dadurch gekennzeichnet, daß die Andruckrolle in mehrere Rollenabschnitte aufeiner gemeinsamen Achse (16) unterteilt ist.

7. Halteeinrichtung nach Anspruch 6, dadurch gekennzeichnet, daß zwischen den Rollenabschnitten Distanzringe (18) auf der gemeinsamen Achse angeordnet sind.

8. Halteeinrichtung nach einem der Ansprüche 1 bis 7, dadurch gekennzeichnet, daß die Rollenachse von mehreren auf der Halteleiste angeordneten, laschenartigen Achshaltern (17) getragen wird.

9. Halteeinrichtung nach einem der Ansprüche 1 bis 8, gekennzeichnet durch Elemente zur Erzeugung einer federnden Anpreßkraft der Andruckrollen.

10. Halteeinrichtung nach Anspruch 9, dadurch gekennzeichnet, daß die Zugspindel (12a, 12b) mit einer Druckfeder (40) versehen ist, welche zwischen einer am freien Zugspindelende angeordneten Stellmutter (41) und dem Spannwinkel (31) eingespannt ist.
